# EUROPEAN PATENT APPLICATION

(11) **EP 2 290 906 A1**
(43) Date of publication of application: **02.03.2011**
(21) Application number: 09168927.3
(22) Date of filing: 28.08.2009
(51) Int. Cl.: H04L 29/08

(54) **Mobile service advertiser**

(71) Applicant: TeliaSonera AB, S-106 63 Stockholm (SE)
(72) Inventor: Tuomela, Frans, 00640 Helsinki (FI); Järvenpää, Marko, 05460 Hyvinkää (FI)
(74) Representative: Simmelvuo, Markku Kalevi

(57) **Abstract**

A mobile service advertisement method and arrangement, wherein an advertisement server is used to determine the need for sending an advertisement message for a mobile user. In the method the need for sending is determined by first trying the service and after failure by determining if the advertisement message has not been sent before and if the destination terminal device is a mobile device. If both conditions are met the advertisement message is sent in the form of SMS message.

## Description

### FIELD OF THE INVENTION

The invention relates to mobile communication services and particularly to Rich Communication Suite advertiser.

### BACKGROUND OF THE INVENTION

Today, consumers experience the power and the promise of enriched communication by using a wide scale of different mobile services and applications. Services and applications include, for example, buddy lists showing dynamically changing status and on-line capabilities, different messaging options and possibilities of adding contents. Consumers may take for granted that these capabilities are available not only on a PC but also on a mobile device and that there is open communication between devices and networks. Discovering different services is a keystone to boosting the usage of these services.

In order to facilitate the easier use and better service discovery the operators, device manufactures and network manufacturers have joined their forces to introduce a Rich Communication Suite.

In the initial phase Rich Communication Suite comprised enriched call, enriched messaging and enriched phone book features. According to the white paper on rich communications the enriched call experience initially provides the capability to share multimedia content during a call. The forms of multimedia sharing available at a given time between the communicating parties are shown to the call participants to eliminate unpleasant errors when either party can not share chosen multimedia.

The enhanced phonebook allows guaranteed communication through capability enhanced contacts. In addition, enhanced phonebook means that communication can be initiated from the phonebook by selecting a communication type.

The enhanced messaging allows the possibility to view and trigger all communication (including calls, SMS, MMS, instant messaging) in a conversational view, where the user can see the communications history. The conversational view is similar to the chat history in instant messaging services. Users gain value from the simplified communications experience and from the availability of the richest possible messaging services for continuing communications dialog.

The initial services mentioned above have been implemented by using IMS (IP multimedia subsystem) and already existing services, such as SMS (Short Message Service), MMS (Multimedia Messaging Service), voice call service and similar.

The purpose of RCS (Rich Communication Suite) is to make the usage of these services easier and increase the interoperability between different devices and networks.

The problem of the present system is that some of the services need to be activated in client before using the service. Some of the services require the activation in both source and destination clients. Some of the customers do not even know all the capabilities their device is capable of. Thus, they are not able to activate all of the services.

### SUMMARY

The invention discloses a method, system, an advertisement server and a computer program for sending a service advertisement message for a mobile service between first and second terminal device implemented using IP multimedia subsystem.

The method comprises sending a service subscribe message from the first terminal device to the IP multimedia subsystem core, forwarding said subscribe message from the IP multimedia subsystem core to a service advertiser server, requesting the service defined in according to the service subscribe message, where in case of service failure the method further comprises sending service failure messages to the first terminal device and the service advertiser server, wherein responsive to said service failure message the service advertiser server determines if the second terminal device has already received the service advertisement, determines if the second terminal device is a mobile device and sends the service advertisement message to the second terminal device according to determination result.

In an embodiment the method further comprises determining the capability of the second terminal device. If the second terminal device is a mobile device but it is not capable of executing the requested service, the method can be terminated. The determination is typically based on the capability database that is typically maintained by the service operator. The capability request may be based on the IMEI code of the terminal device or other suitable unique identification code.

The system comprises a first terminal device, a second terminal device, wherein at least one of the terminal devices is a mobile device, a mobile network comprising an IP multimedia subsystem and a short message system, a service advertiser server, and a service server. In an embodiment the system further comprises a database comprising the capability information of terminal devices. The database may be maintained by the operator or a third party.

The advertisement server for sending a service advertisement message for a mobile service between first and second terminal device implemented using IP multimedia subsystem comprising network connectivity means, wherein said advertisement server is configured to receive a service subscribe message from the IP multimedia subsystem core, respond to the received subscribe message, receive a service failure message from the IP multimedia subsystem core, respond to the received service failure message, wherein responsive to the received failure message the advertisement server is further configured to determine if the second terminal device has already received the service advertisement determine if the second terminal device is a mobile device and send the service advertisement message to the second terminal device according to determination result.

A computer program for sending a service advertisement message for a mobile service between first and second terminal device implemented using IP multimedia subsystem, wherein the computer program is configured to receive a service subscribe message from the IP multimedia subsystem core, respond to the received subscribe message, receive a service failure message from the IP multimedia subsystem core, respond to the received service failure message and responsive to the received failure message the advertisement server is further configured to determine if the second terminal device has already received the service advertisement, determine if the second terminal device is a mobile device and send the service advertisement message to the second terminal device according to determination result when executed in a computing device.

The benefit of the invention is that it allows people to enable new services in their mobile phone even if they are not aware of the existence of the services. For example, a presence aware phonebook application is useful only if presence information is available. The exact presence information is available only if the mobile phone to be located tells the location to the network. The user of the mobile phone must allow or enable the sending of this information and the user can not do that if he/she is not even aware of the service. A further benefit of the invention is that it sends the advertisement message only once. If the presence information can not be retrieved for some other reason, for example, if the phone is not on or it is out of coverage, the advertisement server already knows that the service advertisement message has already been sent.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram of an example embodiment of the present invention,
**Fig. 2** is a signaling chart of an example embodiment of the present invention
**Fig. 3** is a flow chart of an example embodiment of the present invention.

### DETAILED DESCRIPTION OF THE INVENTION

Reference will now be made in detail to the embodiments of the present invention, examples of which are illustrated in the accompanying drawings. The following embodiment is an example embodiment disclosing the use of presence information in a phone book application. A person skilled in the art understands that the presence information may be combined with different applications. Furthermore, a person skilled in the art understands that instead of presence information the principles of the present invention may be applied to many other applications that involve communication between two terminal devices

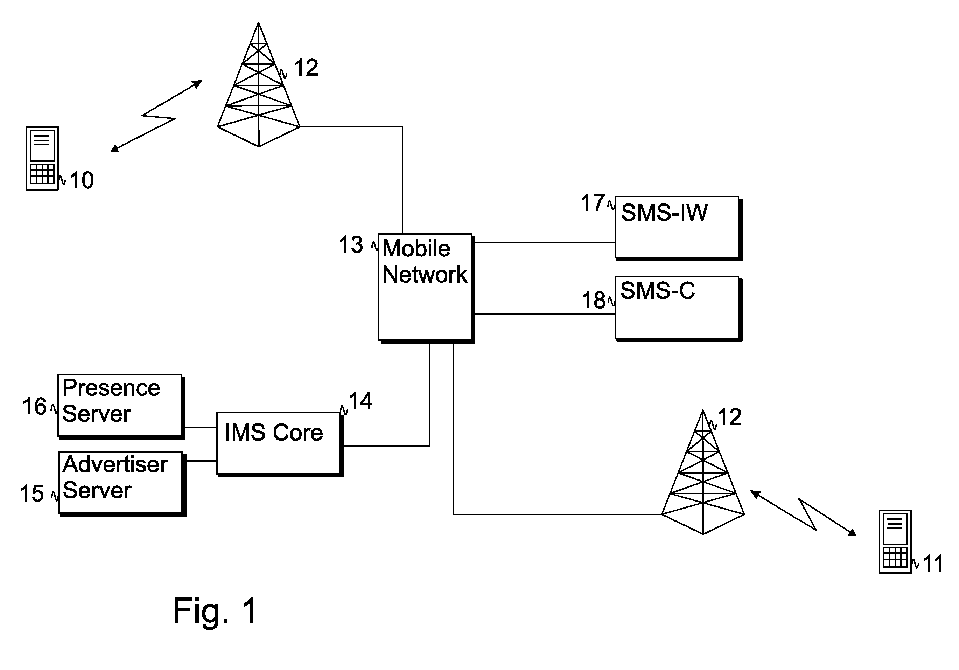

In Figure 1 block diagram of an example embodiment of the present invention is disclosed. Figure 1 comprises two mobile devices 10 and 11 and a plurality of mobile network base stations 12. The Mobile Network 13 disclosed in the Figure represents all components of mobile telecommunication network that are not relevant regarding the inventive idea of the present invention. A person skilled in the art is familiar with these components as those are standardized. In addition to previously mentioned components the system comprises IP multimedia subsystem core 14, Advertisement server 15, Presence server 16 and components 17 and 18 required for sending SMS messages to mobile phones. The presence server 16 relates to presence service and is only an example of a service compatible with the present invention. Instead of SMS-messaging any other suitable messaging system may be used, for example, an MMS-message, e-mail or instant message.

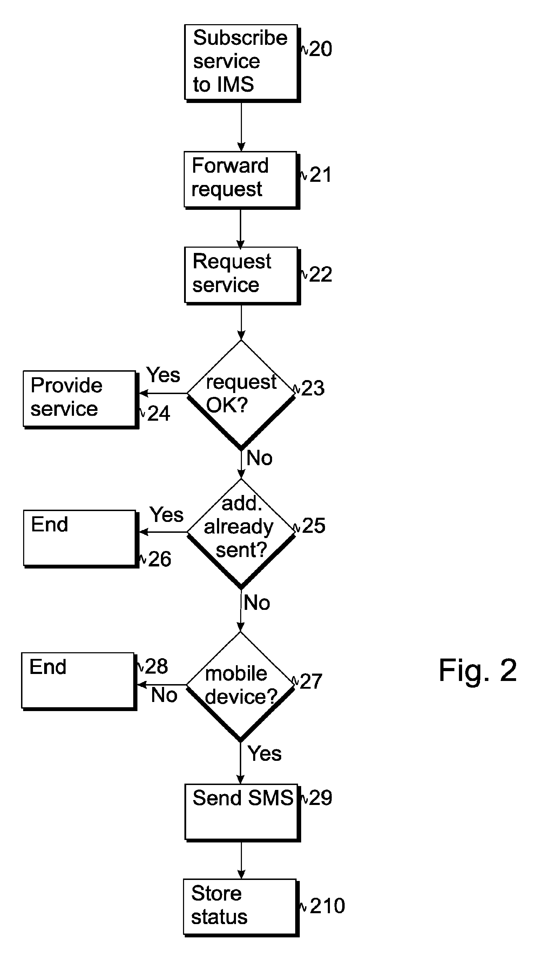

In Figure 2 a method according to the invention is disclosed. The method begins by requesting a service by sending a subscribe message to the IMS core, step 20. In the present example the service subscribed is the presence information, which can be used, for example, for rich phonebook applications. The IMS core then forwards the subscribe message to an advertiser server, step 21. In the present example the advertiser server is an advertiser server suitable for Rich Communication Suite services. The server responds to the forwarded message by sending an acknowledgement message or returns further information if the application needs the information. Then the actual service is requested from presence server, step 22. If the request can be executed, step 23, the service will be provided, step 24. If the service request cannot be successfully executed, for example, because the presence server does not know the presentity, the method proceeds to advertisement phase. Typically this message is a 404 error message that means that subscription is not found. A person skilled in the art recognized that there are also other error messages that can be received and used as a trigger message for the present invention. The sequence disclosed above typically follows the sequence and messages that are disclosed in RFC 3265 published in June 2002. It must be noted that even if the beginning of the complete sequence follows the specifications disclosed in RFC 3265 it is only for compatibility purposes and other suitable sequences may be used. Furthermore, a person skilled in the art understands that the IMS core may forward the request to other network components for completing the request. However, this is not illustrated in the present example.

In the advertisement phase it is first determined if the service advertisement message is already sent, step 25. If the message has already been sent, the method stops, step 26. For example, if the service cannot be executed because the destination terminal device is off and the message has been sent, the method stops. If the message has not been sent, the method determines if the target device is a mobile device, step 27. If the target device is not a mobile device, then method stops, step 28. If the target device is a mobile device, then an SMS message is sent to the target device, step 29. Additionally it is also possible to check if the target device is a mobile device that is capable of executing the requested service. Finally the system stores the status indicating that the SMS has been sent, step 210.

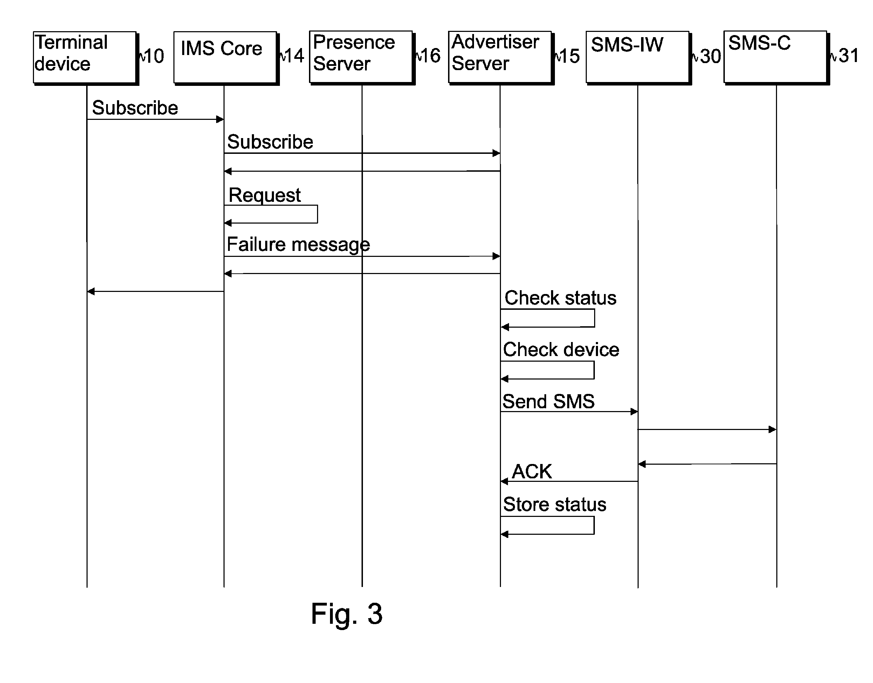

In Figure 3 a signaling chart according to the present invention is disclosed. Terminal device 10, IMS core 14, presence server 16 and advertisement server 15 correspond with the components of Figure 1. In addition to these components SMS-IW 30 and SMS-C 31 are shown. These two components are standard components of a mobile network and they are used for sending SMS-messages. First a subscribe message is sent from terminal device 10 to IMS core 14. Then the subscribe message is forwarded from IMS core 14 to the advertisement server 15. The advertisement returns the message. This may be a pure acknowledgement or the return message may contain additional information. Then the IMS core 14 will send the service request message to the presence server 16. In the example the presence server 16 is not able to provide the requested information. Next failure messages are sent to the advertisement server 15 and the terminal device 10. The advertisement server 15 now starts the advertisement sequence. First the advertisement server 15 checks if an advertisement message has already been sent to the terminal device 10. If the message has not been sent the advertisement server 15 checks if the target terminal device, that is not shown in the signaling chart, but corresponds with the terminal device 11 of Figure 1, is a mobile device. If the terminal device 11 is a mobile device, then the advertisement server sends an SMS message by using SMS-IW 30 and SMS-C 31. After sending the message it receives acknowledgement messages from the SMS-service. After acknowledgement it stores the information that the advertisement message has been sent to the terminal device 11.

Together with the following description and Figure 3 a person skilled in the art is able to understand the principles of advertisement server that is an essential component of the present example. It must be understood that the server as such is not essential but the functionality of the server can be implemented with different tools also. The server or service providing said functionality may be implemented in a shared or dedicated server. In one embodiment the advertisement server is implemented as a software component in a general purpose server. The advertisement server 15 is configured to receive the subscribe message from IMS core 14. Then the advertisement server is configured to send the message back. The message may be sent back as originally received or it may be modified. It is also possible to send an acknowledgement message instead. Then the advertisement server is configured to wait possible failure message if the requested subscribe message cannot be executed successfully. The advertisement server 15 receives the failure message and then acknowledges it correspondingly. First the advertisement server is configured to check if the advertisement message has been already sent to the terminal device 11. Then the advertisement server is configured to check if the terminal device 11 is a mobile device. If the terminal device 11 is a mobile device, the advertisement server 15 sends the advertisement message in SMS format. The functionality described above may be implemented as a computer software product, however, in addition to advertisement server functionality the IP Multimedia Subsystem must be modified to send the subscribe message to advertisement server.

It must be noted that the actual service may require special software or settings in the terminal device. In the example it is assumed that the terminal device 10 already has the required software or settings and the terminal device 11 does not. The SMS message sent from the advertisement server 15 comprises the settings, a pointer to the settings, a link to the required software or other similar information that allows enabling of the requested service.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for sending a service advertisement message to a terminal device, the method comprising:
sending a service subscribe message from the first terminal device to the service operator network;
forwarding said subscribe message from the service operator network core to a service advertiser server;
requesting the service defined in according to the service subscribe message, where in case of service failure the method further comprises:
sending service failure messages to the first terminal device and the service advertiser server, wherein responsive to said service failure message the service advertiser server performs following steps:
determining if the second terminal device has already received the service advertisement;
determining if the second terminal device is a mobile device; and
sending the service advertisement message to the second terminal device according to determination result.

2. The method according to claim 1, wherein said service is presence service.

3. The method according to claim 1 or 2, wherein said service is implemented using operator service environment unit.

4. The method according to any of preceding claims 1 - 3, wherein said method further comprises determining if the second terminal device is capable of performing the requested service.

5. The method according to claim 4, wherein said capability information is maintained in a capability database.

6. A system for sending a service advertisement message for a mobile service between first and second terminal device, which system further comprises:
a first terminal device (10);
a second terminal device (11), wherein at least one of the terminal devices is a mobile device;
a mobile network comprising an IP multimedia subsystem (14) and a short message system (30, 31);
a service advertiser server (15); and
a service server (16),
wherein the system is configured to execute the method according to claims 1 - 5.

7. The system according to claim 6, wherein said service server is a presence server.

8. The system according to claim 6 or 7, wherein said service advertiser server is an RCS advertiser server.

9. The system according to any of preceding claims 6 - 8, wherein said system further comprises a database for maintaining terminal device capability information.

10. An advertisement server (15) for sending a service advertisement message for a mobile service between first and second terminal device (10, 11) implemented using IP multimedia subsystem (14) comprising network connectivity means, wherein said advertisement server is configured to:
receive a service subscribe message from the IP multimedia subsystem core (14);
respond to the received subscribe message;
receive a service failure message from the IP multimedia subsystem core (14);
respond to the received service failure message;
wherein responsive to the received failure message the advertisement server (15) is further configured to:
determine if the second terminal device has already received the service advertisement;
determine if the second terminal device is a mobile device; and
send the service advertisement message to the second terminal device according to determination result.

11. The advertisement server according to claim 10, wherein the advertisement server (15) is further configured to determine if the second terminal device is capable of performing the requested service.

12. A Computer program for sending a service advertisement message for a mobile service between first and second terminal device implemented using IP multimedia subsystem, wherein the computer program is configured to perform the following steps when executed in a computing device:
receive a service subscribe message from the IP multimedia subsystem core (14);
respond to the received subscribe message;
receive a service failure message from the IP multimedia subsystem core (14);
respond to the received service failure message;
wherein responsive to the received failure message the advertisement server (15) is further configured to:
determine if the second terminal device has already received the service advertisement;
determine if the second terminal device is a mobile device; and
send the service advertisement message to the second terminal device according to determination result.

13. The computer program according to claim 12, where in the computer program is further configured to determine if the second terminal device is capable of performing the requested service.

14. The computer program according to claim 13, wherein the computer program is configured to determine the capability by requesting the capability information from a database maintained by the service operator.

## Amended claims

### Amended claims in accordance with Rule 137(2) EPC.

**1.** A method for sending a service advertisement message to a terminal device, the method comprising:
sending a service subscribe message (20) from the first terminal device to the service operator network;
forwarding said subscribe message (21) from the service operator network core to a service advertiser server;
requesting the service (22) defined in according to the service subscribe message, **characterized in that**, where in case of service failure the method further comprises:
sending service failure messages to the first terminal device and the service advertiser server, wherein responsive to said service failure message the service advertiser server performs following steps:
determining if the second terminal device has already received the service advertisement (25);
determining if the second terminal device is a mobile device (27); and
sending the service advertisement message (29) to the second terminal device according to determination result when the second terminal device is a mobile device and the second terminal device has not received the service advertisement.

**2.** The method according to claim 1, wherein said service is presence service.

**3.** The method according to claim 1 or 2, wherein said service is implemented using operator service environment unit.

**4.** The method according to any of preceding claims 1 - 3, wherein said method further comprises determining if the second terminal device is capable of performing the requested service.

**5.** The method according to claim 4, wherein said capability information is maintained in a capability database.

**6.** A system for sending a service advertisement message for a mobile service between first and second terminal device, which system further comprises:
a first terminal device (10);
a second terminal device (11), wherein at least one of the terminal devices is a mobile device;
a mobile network comprising an IP multimedia subsystem (14) and a short message system (30, 31);
a service advertiser server (15); and
a service server (16),
**characterized in that**,
the system is configured to execute the method according to claims 1 - 5.

**7.** The system according to claim 6, wherein said service server is a presence server.

**8.** The system according to claim 6 or 7, wherein said service advertiser server is an RCS advertiser server.

**9.** The system according to any of preceding claims 6 - 8, wherein said system further comprises a database for maintaining terminal device capability information.

**10.** An advertisement server (15) for sending a service advertisement message for a mobile service between first and second terminal device (10, 11) implemented using IP multimedia subsystem (14) comprising network connectivity means, wherein said advertisement server is configured to:
receive a service subscribe message from the IP multimedia subsystem core (14);
respond to the received subscribe message;
receive a service failure message from the IP multimedia subsystem core (14);
respond to the received service failure message; wherein responsive to the received failure message the advertisement server (15) is further configured to:
determine if the second terminal device has already received the service advertisement;
determine if the second terminal device is a mobile device; and
send the service advertisement message to the second terminal device according to determination result.

**11.** The advertisement server according to claim 10, wherein the advertisement server (15) is further configured to determine if the second terminal device is capable of performing the requested service.

**12.** A Computer program for sending a service advertisement message for a mobile service between first and second terminal device implemented using IP multimedia subsystem, wherein the computer program is configured to perform the following steps when executed in a computing device:
receive a service subscribe message from the IP multimedia subsystem core (14);
respond to the received subscribe message;
**characterized in that**, the computer program is further configured to perform the following steps:
receive a service failure message from the IP multimedia subsystem core (14);
respond to the received service failure message; wherein responsive to the received failure message the advertisement server (15) is further configured to:
determine if the second terminal device has already received the service advertisement;
determine if the second terminal device is a mobile device; and
send the service advertisement message to the second terminal device according to determination result when the second terminal device is a mobile device and the second terminal device has not received the service advertisement.

**13.** The computer program according to claim 12, where in the computer program is further configured to determine if the second terminal device is capable of performing the requested service.

**14.** The computer program according to claim 13, wherein the computer program is configured to determine the capability by requesting the capability information from a database maintained by the service operator.
